# EUROPÄISCHE PATENTSCHRIFT

(11) **EP 2 637 857 B1**
(45) Veröffentlichungstag und Bekanntmachung des Hinweises auf die Patenterteilung: **26.11.2014**
(21) Anmeldenummer: 11764477.3
(22) Anmeldetag: 24.09.2011
(51) Int. Cl.: B32B 3/12, B32B 37/00

(54) **SANDWICHBAUTEIL UND VERFAHREN ZU DESSEN HERSTELLUNG**
SANDWICH COMPONENT AND METHOD FOR PRODUCING SAME
COMPOSANT EN SANDWICH ET PROCÉDÉ POUR SA FABRICATION

(30) Priorität: 09.11.2010 DE 102010050872
(43) Veröffentlichungstag der Anmeldung: 18.09.2013
(73) Patentinhaber: Daimler AG, 70327 Stuttgart (DE)
(72) Erfinder: STAMP, Benno, 70619 Stuttgart (DE); BLUMENSTOCK, Tobias, 70569 Stuttgart (DE); GREINER, Ralph, 71229 Leonberg (DE); BIEDER, Hubert, 73770 Denkendorf (DE)
(74) Vertreter: JENSEN & SON
(86) Internationale Anmeldenummer: PCT/EP2011/004794
(87) Internationale Veröffentlichungsnummer: WO 2012/062389

(56) Entgegenhaltungen:
- WO-A1-2010/026054
- WO-A2-2011/088871
- DE-A1-102004 013 146
- DE-A1-102007 007 554

## Beschreibung

Die Erfindung betrifft ein Sandwichbauteil, das einen auf Zellulose basierten Wabenkem und zumindest eine Deckschicht umfasst, und ein Herstellungsverfahren für dasselbe.

Im Zuge der Leichtbaustrategie im Kraftfahrzeugbau zur Senkung sowohl des Kraftstoffverbrauchs und damit der Kosten als auch der Kohlendioxidemissionen, kommen zunehmend Bauteile mit Sandwichstruktur zum Einsatz, die ein deutlich verringertes Gewicht gegenüber herkömmlichen Bauteilen aufgrund der geringen Dichte des Materials, das den Kern bildet, und ausreichende Festigkeitswerte durch eine geeignete Decklagenmaterialauswahl bieten können. Weitere Vorteile solcher Sandwich strukturen liegen in ihren thermischen und akustischen Eigenschaften.

Aus der DE 10 2004 015 472 B4 ist ein mehrlagiges Formteil und ein Verfahren zu seiner Herstellung bekannt, wobei die Werkstoffe für dieses Formteil sehr leicht, billig und problemlos zu recyclen sowie im Einzelfall unempfindlich gegenüber Luftfeuchtigkeit sein sollen. Die Decklagen des Formteils, die an den geöffneten Seiten der Wabenkammem einer Wabenschicht angeordnet sind, bestehen vor der thermoplastischen Verbindung mit den Wabenkammem aus einem nur einseitig vemadelten Vlieswerkstoff nach Art eines Wirrvlieses, das thermoplastische Kunststofffasem enthält, wobei die andere, watteartige Seite des Vlieswerkstoffs nach der Warmumformung und Verfestigung in die Wabenkammern eindringt.

Um das Leichtbaupotenzial einer derartigen Sandwichstruktur in weiteren Bauteilen nutzen zu können, wäre eine Reduktion der flächenbezogene Masse der Deckschichten ohne Verlust der Festigkeitseigenschaften wünschenswert. Nachteilig stellen bislang Deckschichten mit einer verringerten flächenbezogenen Masse keine ausreichende Feuchtigkeitsbarriere mehr dar. So ergibt sich vom obigen Stand der Technik die Aufgabe, eine Sandwichstruktur mit Deckschichten zu schaffen, die eine reduzierte flächenbezogene Masse ohne Beeinträchtigung der mechanischen Festigkeit aufweisen soll und zum Schutz des Wabenkems undurchdringlich für Feuchtigkeit sein soll.

Diese Aufgabe wird durch das Sandwichbauteil mit den Merkmalen des Anspruchs 1 gelöst.

Eine weitere Aufgabe besteht in der Schaffung eines einfachen und kostengünstigen Herstellungsverfahrens für ein solches Sandwichbauteil.

Diese Aufgabe wird durch das Verfahren mit den Merkmalen des Anspruchs 6 gelöst.

Weiterbildungen des Bauteils und des Verfahrens sind in den jeweiligen Unteransprüchen ausgeführt.

Ein erfindungsgemäß ausgeführtes Sandwichbauteil besteht aus zumindest einer Decklage und einem Wabenkem. Die Decklage wird durch eine Deckschicht aus Verstärkungsfasern mit einer thermoplastischen Matrix gebildet, während der Wabenkem aus einem auf Zellulose basierenden Material besteht und eine Vielzahl von Stegen aufweist, deren Endkanten eine Ebene aufspannen, auf denen die Decklage zur Anlage kommt.

In einer ersten beispielhaften Ausführungsform des erfindungsgemäßen Sandwichbauteils umfasst die Decklage zwischen der Deckschicht und den Stegen des Wabenkems eine Sperrschicht aus einem thermoplastischen Material. Die Schmelzeigenschaften des thermoplastischen Materials der Sperrschicht entsprechen dabei den Schmelzeigenschaften des thermoplastischen Matrixmaterials der Deckschicht, damit zwischen der Deckschicht und der Sperrschicht eine Zwischenschicht ausgebildet werden kann, die Verstärkungsfasern aus der Deckschicht und thermoplastisches Material der Sperrschicht aufweist. Entsprechende Schmelzeigenschaften bedeuten insbesondere Schmelzpunkte, Glaspunkte und Schmelzviskositäten, die nicht wesentlich voneinander abweichen. Die Matrix der Zwischenschicht ist somit durch eine Polymermischung oder auch ein Polymerblend gebildet, welches den Thermoplasten der Sperrschicht und den Thermoplasten der Deckschicht umfasst. Abgesehen von Spuren enthält die Sperrschicht keine Verstärkungsfasern. Bei den Spuren an Verstärkungsfasern handelt es sich um Fasern, welche aus der Zwischenschicht in die Sperrschicht hineinragen.

Die Verstärkungsfasern der Zwischenschicht sind dabei von einem Anteil des thermoplastischen Materials der Deckschicht und von einem Anteil des thermoplastischen Materials der Sperrschicht durchdrungen. Die thermoplastische Sperrschicht, mittels der die Zwischenschicht stoffschlüssig mit der Deckschicht verbunden ist, verhindert einerseits, dass Verstärkungsfasern aus der Deckschicht in die Wabeninnenräume zwischen den Stegen eindringen und dadurch den festigkeitsbildenden Faseranteil in der Deckschicht verringern und bildet andererseits eine integrierte Feuchtigkeitsbarriere, die den auf Zellulose basierenden Wabenkern vor eindringender Feuchtigkeit schützt. Die Wabeninnenräume sind somit nahezu frei von frei liegenden, bzw. nicht durch Thermoplast gebundene Verstärkungsfasern. Das Wabeninnere ist somit abgesehen von Spuren frei von Verstärkungsfasern. Bei den Spuren an Verstärkungsfasern handelt es sich um vereinzelte Fasern, welche aus der Zwischenschicht in die Sperrschicht hinein und durch sie hindurch ragen.

Durch die Sperrschicht kann also die Deckschicht hinsichtlich ihres Flächengewichts reduziert werden, da alle vorhandenen Verstärkungsfasern ohne Verlust durch Fasern in den Wabenhohlräumen in der Deckschicht genutzt werden können. Die mit dem erhöhten Thermoplastanteil stark konsolidierte Zwischenschicht trägt zusätzlich zu der Festigkeit der Decklage bei.

In einer besonders vorteilhaften Ausführungsform kann das thermoplastische Material der Sperrschicht das gleiche thermoplastische Material wie das thermoplastische Matrixmaterial der Deckschicht sein. Hierfür kommen insbesondere Thermoplasten wie ein Polyamid, ein Acrylnitril-Butadien-Styrol, ein Polypropylen und/oder ein anderes Polyolefin in Frage.

Die Deckschicht des erfindungsgemäßen Sandwichbauteils kann eine Dicke in einem Bereich von 0,4 bis 0,8 mm, vorzugsweise ca. 0,6 mm aufweisen, während die Summe der Dicken der Sperrschicht und der Zwischenschicht in einem Bereich von 0,2 bis 0,4 mm liegt und insbesondere ca. 0,3 mm beträgt. Die Summe der Schichtdicken der Sperrschicht und der Zwischenschicht entspricht dabei etwas mehr als die Stärke einer Folie, die zur Bildung dieser Schichten verwendet wird. Zur Herstellung der Sperrschicht werden bevorzugt thermoplastische Folien mit einer Dicke von 0,1 mm bis 0,4 mm verwendet.

Es ist von besonderer Bedeutung, dass die Steg-Endkanten in die thermoplastische Sperrschicht der Decklage aufgenommen werden. Die Endkanten der Stege sind dabei vollständig vom Thermoplasten der Sperrschicht umhüllt. Die Stege sind in der Verbindungszone zur Deckschicht seitlich durch die Sperrschicht, bzw. den Thermoplasten der Sperrschicht gestützt. Hierdurch wird einerseits erreicht, dass die Decklage mit den Stegen des Wabenkems relativ fest verbunden sind und andererseits, dass eine gute Abdichtung des Wabenkems nach außen erreicht wird. Der Steg ist an der Kante quasi durch den Thermoplasten versiegelt. Erst durch das Umranden, bzw. das verfahrensgemäße Umfließen der Stegkanten, kann eine sehr gute Abdichtung erfolgen. Da der Thermoplast der Sperrschicht nicht faserverstärkt ist, wird eine sehr dichte und Fehlstellenfreie Umrandung erreicht. Das Stegmaterial und die Wabeninnenräume werden hierdurch sehr effektiv vor dem Zutritt von Feuchtigkeit geschützt.

Die Abdichtung ist besonders dann von Vorteil, wenn der Wabenkem aus Papier oder Pappe besteht, da es sich hierbei um poröse Werkstoffe handelt, bei welchen gerade über ungeschützte Kanten Feuchtigkeit aufgenommen kann.

Dabei spielt die Tiefe der Umrandung der Endkanten durch den Thermoplasten der Sperrschicht eine nicht unerhebliche Rolle. Die Tiefe der Umrandung ist insbesondere abhängig von der Relation zwischen der Breite der Stege (Stegbreite) und der Dicke der Sperrschicht. Dabei ist die Dicke der Sperrschicht im Bereich zwischen den Wabenstegen gemeint, da die Sperrschichtdicke im Bereich der Umrandung naturgemäß geringer ausfällt. Besonders bevorzugt liegt die Dicke der Sperrschicht oberhalb 30% und unterhalb 150 % der Stegbreite, insbesondere bei 30 bis 50%. Eine Dicke der Sperrschicht weit oberhalb der Stegbreite bringt in der Regel keine weiteren Vorteile.

Die Breite der Stege liegt bevorzugt im Bereich von 200 bis 600 µm. Besonders bevorzugt werden Wabenkeme aus Papier verwendet, bei denen die Stegbreite im Bereich von 200 bis 400 µm liegt.

Bevorzugt liegt die Tiefe der Umrandung, bzw. die Länge mit welcher die Endkante des Stegs des Wabenkems in die Sperrschicht eindringt bei mindestens 80 % der Stegbreite. Bevorzugt sind 100 bis 200 % der Stegbreite. Die Tiefe der Umrandung kann dabei zu den beiden Seiten des Stegs, bzw. über die seitliche Ausdehnung des Stegs variieren. Eine Tiefe der Umrandung oberhalb der doppelten Stegbreite bringt in der Regel keine weiteren Vorteile.

Durch die seitliche Umrandung der Steg-Endkanten, bzw. das vergleichsweise tiefe Eindringen der Stege in die Decklage ist eine besonders feste Verbindung sichergestellt, da auch Scherkräfte gut aufgenommen werden können.

Die zur Bildung der Decksicht verwendeten Verstärkungsfasern mit thermoplastischer Matrix können durch eine Fasermatte, etwa ein Faservlies, oder ein Hybridgewebe, ein Hybridgeflecht oder -gestricke etc. gebildet werden.

Die thermoplastische Matrix der Deckschicht kann auch in der Form nicht-konsolidierter Thermoplastfasern eingebracht werden. Diese liegen neben den Verstärkungsfasern im Gewebe, etc. vor. Die Fasern, sowohl Thermoplastfasern als auch Verstärkungsfasern, können auch in gebündelter Form als Rovings vorliegen. Denkbar ist auch eine Variante, in der Verstärkungsfasern einzeln oder in Bündeln von einer thermoplastischen Matrixschicht umhüllt sind. Alternativ zu solchen Hybridstrukturen können die Verstärkungsfasem mit der thermoplastischen Matrix auch durch eine vorkonsolidierte Thermoplastplatte mit einem eingebetteten Verstärkungsfasergewebe bereitgestellt werden. Im Laufe des Verarbeitungsprozesses schmelzen die Thermoplastfasern auf und bilden entsprechend die thermoplastische Matrix aus.

Bei den Verstärkungsfasern kann es sich um Naturfasern, Glasfasern, Kohlenstofffasern, bzw. Carbonfasern, Polymer-, insbesondere Aramidfasern oder eine Kombination davon handeln.

Ein Verfahren zur Herstellung eines solchen Sandwichbauteils umfasst generell das Bilden der Decklage des Sandwichbauteils, die zumindest an einer Seite des Wabenkems, Unterseite oder Oberseite, angeordnet wird, so dass die Decklage auf dem Wabenkern zur Anlage kommt. Zur Bildung einer Decklage wird zunächst eine thermoplastische Kunststofffolie auf dem Zellulose basierten Wabenkem auf der Ebene abgelegt, die durch die Steg-Endkanten des Wabenkems aufgespannt wird. Das Aufbringen von Klebstoffen ist nicht erforderlich. Darüber wird ein Halbzeug angeordnet, das aus Verstärkungsfasern und thermoplastischer Kunststoffmatrix besteht.

Diese Anordnung aus Wabenkem, Kunststofffolie und Halbzeug wird in einem Presswerkzeug erwärmt und komprimiert, so dass die thermoplastische Kunststoffmatrix und die Kunststofffolie, die aus thermoplastischen Materialien bestehen, die einander entsprechende Schmelzeigenschaften aufweisen, zumindest teilweise anschmelzen. Durch das angeschmolzene Material der thermoplastischen Kunststofffolie erfolgt die Bildung der Sperrschicht direkt angrenzend an den Wabenkern, während durch die Konsolidierung der Verstärkungsfasern mit der thermoplastischen Kunststoffmatrix in einer Kunststofffolien beziehungsweise Sperrschicht entfernten Lage der Decklage die Deckschicht gebildet wird. Zwischen der Deckschicht und der Sperrschicht bildet sich die Zwischenschicht durch die Konsolidierung der Verstärkungsfasern der Deckschicht in einer Kunststofffolien beziehungsweise Sperrschicht nahen Lage mit einem Anteil des thermoplastischen Matrixmaterials der Deckschicht und einem Anteil des thermoplastischen Materials der Sperrschicht aus. So entsteht in der Zwischenschicht ein stark konsolidiertes Material bestehend aus Verstärkungsfaser und einem erhöhten Thermoplastanteil, der sich aus dem Matrixmaterial und dem Kunststofffolienmaterial zusammensetzt.

Ferner wird durch das zumindest teilweise Anschmelzen der thermoplastischen Kunststoffmatrix und der Kunststofffolie ein guter Verbund zwischen Wabenkern und Decklage erreicht, wobei die Steg-Endkanten zumindest in die thermoplastische Sperrschicht der Decklage aufgenommen werden. Die Steg-Endkanten werden während des teilweisen Anschmelzens der Kunststofffolie von dieser umflossen, so dass eine Umrandung der Endkanten mit Thermoplast entsteht. Dabei ist es von besonderer Bedeutung, dass die Sperrschicht nicht faserverstärkt ist. Hierdurch kann der Thermoplast ungehindert fließen und eine sehr dichte und Fehlstellen-freie Umrandung bilden. Die Endkanten werden hierdurch vollständig seitlich und nach oben durch den dichten Thermoplasten abgeschlossen. Durch die seitliche Umrandung der Steg-Endkanten, bzw. das vergleichsweise tiefe Eindringen der Stege in die Decklage können auch Scherkräfte gut aufgenommen werden.

Die Tiefe der Umrandung der Steg-Endkanten, bzw. das Einsinken des Wabenkems in die thermoplastische Folie kann bei gegebenem Thermoplasten beispielsweise über den Druck des Presswerkzeug gesteuert werden.

Die Erwärmung im Presswerkzeug wird dabei durch eine Temperaturbeaufschlagung im Bereich der Schmelztemperatur des thermoplastischen Kunststoffs durchgeführt. Bevorzugt liegt die Temperatur von Kunststoffmatrix und Kunststofffolie im Bereich von der Glasübergangstemperatur bis zu der Schmelztemperatur des entsprechenden Kunststoffs. Die Erwärmungstemperatur des Presswerkzeugs beträgt dabei mindestens die Schmelztemperatur.

Um ein geformtes Sandwichbauteil zu erhalten, kann der Wabenkem, bevor die Decklage gebildet wird, geformt werden, indem er zunächst mit Wasser durch Besprühen oder Bedampfen befeuchtet wird. Der befeuchtete Wabenkem kann dann in einem Presswerkzeug mit Stempel und Matrize angeordnet werden, die eine vorbestimmte Form des Sandwichbauteils zeigen, und zwischen denen dann die Umformung des befeuchteten Wabenkerns bei einer Temperatur in einem Bereich von 40 °C bis 200 °C durch Druckausübung stattfindet.

Hierauf folgen die erfindungsgemäße Anordnung der Kunststofffolie und des Halbzeugs, deren gleichzeitiges An- beziehungsweise Aufschmelzen und Konsolidierung durch Komprimierung in einem entsprechend geformten Presswerkzeug erfolgen.

Erfindungsgemäß wird somit ein Sandwichbauteil geschaffen, bei dem durch die Sperrschicht ein Eindringen von Fasern in die Wabenkammern verhindert wird, wo sie keinen Verstärkungseffekt mehr haben, vielmehr wird vorteilhaft erreicht, dass alle in der Decklage vorliegenden Verstärkungsfasern zur Verstärkung beitragen. So kann die Dicke der Deckschicht verringert werden, wobei die Sperrschicht, die das Eindringen in den Wabeninnenraum verhindert, gleichzeitig als feuchte Barriere dient, und den Zellulose basierten Wabenkern vor eindringender Feuchtigkeit schützt.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Dabei zeigen:
- Fig. 1: eine schematische Seitenschnittansicht eines Anbindungsbereichs eines Wabenstegs an der Decklage,
- Fig. 2: eine mikroskopische Vergleichsaufnahme eines Anbindungsbereichs ohne Sperrschicht,
- Fig. 3: eine mikroskopische Vergleichsaufnahme eines Anbindungsbereichs, wo eine 0,08 mm starke Folie zum Einsatz kam, die keine Sperrschicht ausbildet,
- Fig. 4: eine mikroskopische Aufnahme eines Anbindungsbereichs eines erfindungsgemäß ausgeführten Sandwichbauteils, bei dem eine 0,3 mm starke Folie zur Bildung der Sperrschicht verwendet wurde.

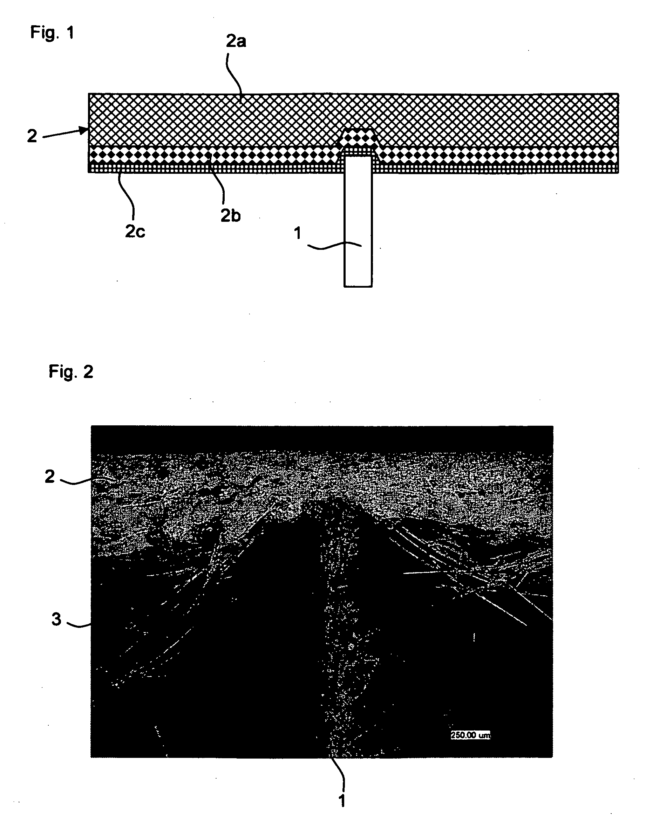

Das erfindungsgemäße Sandwichbauteil, das eine Reduzierung der flächenbezogenen Masse, beziehungsweise des Flächengewichtes der Decklagen ermöglicht, um das Leichtbauteilpotenzial der Sandwichstrukturen in verschiedenartigen Bauteilen freisetzen zu können, weist eine Decklage 2 auf, wie sie in Fig. 1 schematisch skizziert ist.

Die Decklage 2, die auf den Endkanten der Stege 1 eines Wabenkems zur Anlage kommt, weist als oberste, das heißt von dem Steg 1 am weitesten entfernt liegende Schicht die Deckschicht 2a aus Verstärkungsfasern mit thermoplastischer Matrix auf.

Die Bezeichnung "Wabe" soll die Struktur des Wabenkems nicht beschränkend bezeichnen, sondern meint eine aus Stegen aufgebaute Struktur mit geringer Dichte und hoher Steifigkeit. Geeignete Wabenkernstrukturen umfassen die hexagonalen typischen "Bienenwabenstrukturen" genauso wie wellenförmige, kreisförmige, rauten- oder rechteckförmige Faltstrukturen, sowie unregelmäßig gestaltete, "organisch" anmutende Strukturen.

Als Zellulose basiertes Material für den Wabenkem kommt unter anderem Papier und Karton in Frage.

Die Verstärkungsfasern zur Bildung der Deckschicht können in Form von Vlies, Wirrvlies oder Fasermatten mit gerichteten Fasern, Geweben, Gestricken, Gelegen, sowohl unidirektional als auch mehrdirektional vorliegen. Hierbei ist auch die Verwendung eines Hybridgarns denkbar, so dass ein Faserhalbzeug verwendet wird, das thermoplastische Fasern enthält, die die Matrix bilden, sowie Verstärkungsfasern. Bei den Verstärkungsfasern handelt es sich dabei um Naturfasern, Glasfasern, Kohlenstoff- bzw. Carbonfasern, Polymer-, insbesondere Aramidfasern, es können aber auch Kombinationen verschiedener Fasern verwendet werden.

Die Decklage 2 weist erfindungsgemäß zwischen der Deckschicht 2a und den Stegen 1 eine Sperrschicht 2c auf, die aus einem thermoplastischen Material besteht, das hier artgleich zu dem thermoplastischen Matrixmaterial ist. Erfindungsgemäß müssen jedoch mindestens die Schmelzeigenschaften der thermoplastischen Materialien von Deckschicht und Sperrschicht einander entsprechen. Vorzugsweise handelt es sich bei dem thermoplastischen Matrixmaterial und dem thermoplastischen Material der Sperrschicht um das gleiche thermoplastische Kunststoffmaterial, das beispielsweise ein Polyamid, ein Acrylnitril-Butadien-Styrol, ein Polypropylen oder ein anderes Polyolefin sein kann.

Die Sperrschicht 2c verhindert einerseits ein Eindringen von Verstärkungsfasern auf der Deckschicht 2a in den Wabeninnenraum, der durch die Stege 1 begrenzt wird, so dass sämtliche Verstärkungsfasern innerhalb der Decklage 2 bleiben und zu dem Verstärkungseffekt beitragen. Da es somit keinen "Verlust" an Verstärkungsfasern mehr gibt, kann das Flächengewicht der Decklage 2 verringert werden. Die Sperrschicht 2c bietet zusätzlich als reine thermoplastische Schicht den Vorteil, als Feuchtigkeitsbarriere zu wirken und somit für den Papierwabenkern auch bei verringertem Flächengewicht einen ausreichenden Schutz gegen Feuchtigkeit zu bieten. Zwischen der Sperrschicht 2c und der Deckschicht 2a ist dabei eine Zwischenschicht 2b ausgebildet, die sich durch ein stark konsolidiertes Material aus Verstärkungsfasern aus der Deckschicht 2a sowohl mit Matrixmaterial aus Deckschicht 2a als auch mit thermoplastischen Material aus der Sperrschicht 2c zu einem Faser-Matrixverbundwerkstoff konsolidiert, der sich durch einen erhöhten thermoplastischen Materialanteil kennzeichnet.

Dieser dreischichtige Aufbau der Decklage 2 kann in einfacher Weise mittels des erfindungsgemäßen Verfahrens hergestellt werden, bei dem eine thermoplastische Kunststofffolie auf dem Wabenkem und auf der Kunststofffolie eines Faserhalbzeugs mit thermoplastischer Kunststoffmatrix angeordnet wird, die zusammen in einem Presswerkzeug erwärmt und komprimiert werden, wodurch die Verstärkungsfasern in der Matrixschmelze konsolidiert werden. Um ein gleichzeitiges An- beziehungsweise Aufschmelzen der thermoplastischen Kunststofffolie mit der thermoplastischen Kunststoffmatrix des Halbzeugs zu erhalten, werden artgleiche Thermoplasten verwendet, vorzugsweise das gleiche thermoplastische Material. Die zur Bildung der Sperrschicht 2c verwendete Folie muss dabei relativ dick sein, um einen Gegendruck für die Verstärkungsfasern aus der Deckschicht 2a aufzubauen. Beim Pressen baut die Folie einen Gegendruck auf das Vlies auf und bewirkt so eine Konsolidierung und ein Zusammenhalten des Vlieses.

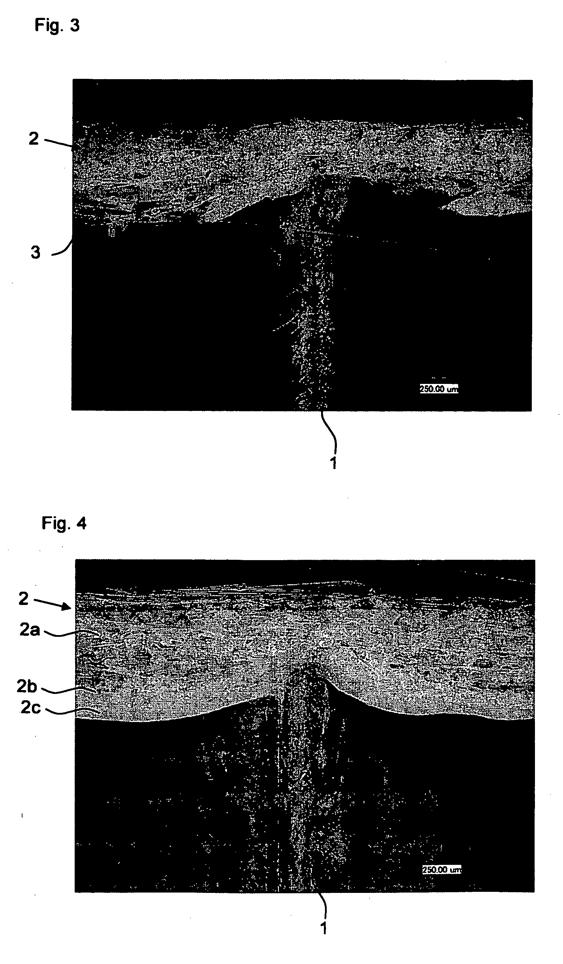

So zeigt Fig. 3 eine Decklage 2 auf einem Steg 1, wobei hier nur eine 0,08 mm starke Folie zwischen Wabenkem und Deckschicht angeordnet wurde. Die Stärke dieser Folie war nicht ausreichend die Verstärkungsfasern aus der Deckschicht zu konsolidieren, es bildet sich keine Sperrschicht aus, so dass noch Verstärkungsfasern 3 in die Wabenzwischenräume eindringen können. Der Wabensteg ist teilweise von der Decklage umrandet. Die Umrandung wird dabei teilweise von faserhaltigem und porösem Material und zum Teil durch den Thermoplasten der Folie gebildet. Die Stärke der Folie hat hier nicht ausgereicht, eine dichte Umrandung der Kante des Stegs zu gewährleisten.

Ganz deutlich wird dies aus Fig. 2, in der zum Vergleich der Anbindungsbereich eines Sandwichbauteils ohne Sperrschicht dargestellt ist, bei dem keine Folie verwendet wurde.

Deutlich sind hier die in das Wabenkeminnere eindringende Verstärkungsfasern 3 zu sehen, die somit nicht mehr zum Verstärkungseffekt der Decklage 2 beitragen können. Der Steg wird quasi nicht in die Decklage aufgenommen, bzw. es findet quasi keine Umrandung des Stegs statt. Nach oben wie auch zu den Seiten der Stegkante findet sich kein dichter Abschluss. Vielmehr grenzt die Stegkante an poröses mit Fasern durchsetztes Material.

Anders das erfindungsgemäße Sandwichbauteil, wie es in Fig. 4 zu sehen ist: Hier dringen keine Verstärkungsfasern in den Wabeninnenraum ein, sondern alle in der Decklage 2 vorliegende Verstärkungsfasern tragen zum Verstärkungseffekt bei. Die Deckschicht 2a weist hier in etwa eine Dicke von 0,6 mm auf während die beiden Schichten, Zwischenschicht 2b und Sperrschicht 2c, in Summe etwa 0,3 mm ausmachen, wie es durch eine 0,3 mm starke Folie erreicht werden kann. So kann das Flächengewicht der Decklagen 2 ohne Verlust der Verstärkungseigenschaften verringert werden, während die Sperrschicht 2c gleichzeitig eine wirksame Feuchtigkeitsbarriere darstellt.

Als Material des Wabenkems wurde Papier eingesetzt mit einer Stegbreite von ca. 300 µm. Die in der mikroskopischen Abbildung wiedergegebene Breite von 650 µm ergibt sich dadurch, dass der Steg bei der Präparation schräg angeschnitten wurde. Die Tiefe der Umrandung mit Thermoplast liegt bei ca. 450 µm auf der linken und ca. 300 µm auf der rechten Seite. Die Stegkante ist somit nach oben und zu den Seiten vollständig von Thermoplast umrandet. Der Thermoplast führt somit zu einer Versiegelung der Kanten gegenüber Feuchtigkeit und zu einer seitlichen Stützung der Kanten in der Verbindungszone.

## Patentansprüche

1. Sandwichbauteil, umfassend zumindest eine Decklage (2), die eine Deckschicht (2a) aus Verstärkungsfasern mit einer thermoplastischen Matrix umfasst, und einen Wabenkern, der aus einem auf Zellulose basierten Material besteht und eine Vielzahl von Stegen (1) aufweist, wobei die Steg-Endkanten eine Ebene aufspannen, auf denen die Decklage (2) zur Anlage kommt,
wobei die Decklage (2) zwischen der Deckschicht (2a) und den Stegen (1) des Wabenkems eine Sperrschicht (2c) umfasst, die aus einem thermoplastischen Material ohne Verstärkungsfasern beschaffen ist, dessen Schmelzeigenschaften den Schmelzeigenschaften entsprechen, die das thermoplastische Matrixmaterial der Deckschicht (2a) aufweist,
und wobei zwischen der Deckschicht (2a) und der Sperrschicht (2c) eine Zwischenschicht (2b) ausgebildet ist, die Verstärkungsfasern aus der Deckschicht (2a) und thermoplastisches Material der Sperrschicht (2c) aufweist, wobei die Verstärkungsfasern der Zwischenschicht (2b) von einem Anteil des thermoplastischen Matrixmaterials der Deckschicht (2a) und von einem Anteil des thermoplastischen Materials der Sperrschicht (2c) durchdrungen sind,
**dadurch gekennzeichnet, dass**
die Endkanten der Stege (1) des Wabenkerns von der thermoplastischen Sperrschicht (2c) umrandet und hierdurch mit der Decklage (2) verbunden sind.

2. Sandwichbauteil nach Anspruch 1,
**dadurch gekennzeichnet, dass**
die Länge mit welcher die Endkanten des Stege des Wabenkerns in die Sperrschicht eindringen, bzw. die Tiefe der Umrandung oberhalb 80% der Stegbreite, insbesondere bei 100 bis 200 % der Stegbreite liegt.

3. Sandwichbauteil nach zumindest einem der vorangegangenen Ansprüche,
**dadurch gekennzeichnet, dass**
das thermoplastischen Material der Sperrschicht (2c) und das thermoplastische Matrixmaterial der Deckschicht (2a) das gleiche thermoplastische Material sind, das insbesondere ein Polyamid, ein Acrylnitril-Butadien-Styrol, ein Polypropylen und/oder ein anderes Polyolefin ist.

4. Sandwichbauteil nach zumindest einem der vorangegangenen Ansprüche,
**dadurch gekennzeichnet, dass**
die Deckschicht (2a) eine Dicke in einem Bereich von 0,4 bis 0,8 mm, insbesondere 0,6 mm aufweist, und eine Summe der Dicken der Sperrschicht (2c) und der Zwischenschicht (2b) in einem Bereich von 0,2 bis 0,4 mm liegt und bevorzugt 0,3 mm beträgt.

5. Sandwichbauteil nach zumindest einem der vorangegangenen Ansprüche,
**dadurch gekennzeichnet, dass**
die Dicke der Sperrschicht oberhalb 30% und unterhalb 150 %, insbesondere bei 30 bis 50% der Stegbreite liegt.

6. Sandwichbauteil nach zumindest einem der Ansprüche 1 bis 5,
**dadurch gekennzeichnet, dass**
die Verstärkungsfasern Naturfasern, Glasfasern, Carbonfasern, Polymer-, insbesondere Aramidfasern oder eine Kombination davon sind.

7. Verfahren zur Herstellung eines Sandwichbauteils nach zumindest einem der Ansprüche 1 bis 6, wobei die Decklage (2) zumindest an einer der Seiten Unterseite des Wabenkems oder Oberseite des Wabenkems gebildet wird, und wobei die Steg-Endkanten des Wabenkems eine Ebene aufspannen, auf denen die Decklage (2) zur Anlage kommt,
umfassend die Schritte:
- Anordnen einer thermoplastischen Kunststofffolie auf dem Wabenkem,
- Anordnen eines Halbzeugs auf der Kunststofffolie, wobei das Halbzeug aus Verstärkungsfasem mit einer thermoplastischen Kunststoffmatrix besteht,
- Erwärmen und Komprimieren der Anordnung aus Wabenkem, Kunststofffolie und Halbzeug in einem Presswerkzeug, dabei zumindest teilweise Anschmelzen der thermoplastischen Kunststoffmatrix und der Kunststofffolie, die aus thermoplastischen Materialien beschaffen sind, die einander entsprechende Schmelzeigenschaften aufweisen, dabei
- Bilden der Sperrschicht (2c) durch das Material der thermoplastischen Kunststofffolie,
- Bilden der Deckschicht (2a) durch Konsolidieren der Verstärkungsfasern mit der thermoplastischen Kunststoffmatrix in einer kunststofffolienfernen Lage der Decklage (2), und
- Bilden der Zwischenschicht (2b) durch Konsolidieren der Verstärkungsfasern der Deckschicht (2a) in einer kunststofffoliennahen Lage mit einem Anteil des thermoplastischen Matrixmaterials der Deckschicht (2a) und mit einem Anteil des thermoplastischen Materials der Sperrschicht (2c).

8. Verfahren nach Anspruch 7,
**dadurch gekennzeichnet, dass**
für die Deckschicht
- ein Faservlies, ein Hybridgewebe, Fasergeflecht oder Fasergestrick aus Verstärkungsfasern und nicht-konsolidierten Thermoplastfasern
- oder eine vorkonsolidierte Thermoplastplatte mit eingebetteten Verstärkungsfasern bereitgestellt wird

9. Verfahren nach Anspruch 7 oder 8,
umfassend die Schritte:
- Anschmelzen der thermoplastischen Kunststoffmatrix und der Kunststofffolie, und unter Erwärmen durch Beaufschlagung mit einer Temperatur im Bereich der Schmelztemperatur des thermoplastischen Kunststoffs, insbesondere auf einen Temperaturbereich, der sich von einer Glasübergangstemperatur bis zu der Schmelztemperatur erstreckt, und dabei
- Umfließen Steg-Endkanten durch den thermoplastischen Kunststoff der Kunststofffolie unter Bildung einer Umrandung der Steg-Endkanten
- Erkalten des der Kunststoffe unter Bildung einer festen Verbindung zwischen der Decklage (2) und den den Stegen (1) des Wabenkerns und Abdichten der Steg-Endkanten durch thermoplastischen Kunststoff.

10. Verfahren nach einem der Ansprüche 7 bis 9,
umfassend die Schritte:
- dem Wabenkern Formgeben vor dem Anordnen der Kunststofffolie auf demselben, durch Befeuchten des Wabenkems mit Wasser durch Besprühen oder Bedampfen, Anordnen des befeuchteten Wabenkems in einem Presswerkzeug mit einem Stempel und einer Matrize, die eine vorbestimmte Form des Sandwichbauteils bereitstellen, und Umformen des befeuchteten Wabenkems in dem Presswerkzeug durch Druckausübung und bei einer Temperatur in einem Bereich von 40 °C bis 200 °C**.**

## Claims

1. Sandwich component, comprising a cover layer (2), which includes a surface layer (2a) of reinforcing fibres with a thermoplastic matrix, and a honeycomb core, which consists of a cellulose-based material and has a plurality of webs (1), the web end edges defining a plane on which the cover layer (2) comes to lie,
wherein the cover layer (2) comprises between the surface layer (2a) and the webs (1) a barrier layer (2c) made of a thermoplastic material without reinforcing fibres, the melting characteristics of which material correspond to the melting characteristics of the thermoplastic matrix material of the surface layer (2a),
and wherein an intermediate layer (2b) comprising reinforcing fibres from the surface layer (2a) and thermoplastic material of the barrier layer (2c) is formed between the surface layer (2a) and the barrier layer (2c), the reinforcing fibres of the intermediate layer (2b) being penetrated by a proportion of the thermoplastic matrix material of the surface layer (2a) and by a proportion of the thermoplastic material of the barrier layer (2c), **characterised in that**
the end edges of the webs (1) of the honeycomb core are surrounded by the thermoplastic barrier layer (2c) and thereby joined to the cover layer (2).

2. Sandwich component according to claim 1,
**characterised in that**
the length by which the end edges of the honeycomb core penetrate into the barrier layer and/or the depth of the surround amount(s) to more than 80% of the web width, being in particular 100% to 200% of the web width.

3. Sandwich component according to one or more of the preceding claims,
**characterised in that**
the thermoplastic material of the barrier layer (2c) and the thermoplastic material of the surface layer (2a) are the same thermoplastic material, being in particular a polyamide, an acrylonitrile-butadiene-styrene, a polypropylene and/or another polyolefin.

4. Sandwich component according to one or more of the preceding claims,
**characterised in that**
the surface layer (2a) has a thickness in a range of 0.4 mm to 0.8 mm, in particular 0.6 mm, and **in that** a sum of the thicknesses of the barrier layer (2c) and the intermediate layer (2b) lies in a range of 0.2 mm to 0.4 mm, being preferably 0.3 mm.

5. Sandwich component according to one or more of the preceding claims,
**characterised in that**
the thickness of the barrier layer is more than 30% and less than 150% of the web width, being in particular 30% to 50% thereof.

6. Sandwich component according to one or more of claims 1 to 5,
**characterised in that**
the reinforcing fibres are natural fibres, glass fibres, carbon fibres, polymer, in particular aramid, fibres or a combination thereof.

7. Method for producing a sandwich component according to one or more of claims 1 to 6, wherein the cover layer (2) is formed on the underside of the honeycomb core and/or on the top side of the honeycomb core and wherein the web end edges define a plane on which the cover layer (2) comes to lie,
comprising the steps of:
- placing a thermoplastic plastic film on the honeycomb core,
- placing a semi-finished product on the plastic film, the semi-finished product consisting of reinforcing fibres with a thermoplastic plastic matrix,
- heating and compressing the arrangement of honeycomb core, plastic film and semi-finished product in a pressing tool, in this process at least partial melting of the thermoplastic plastic matrix and the plastic film, which are made of plastic materials having matching melting characteristics, in this process
- forming the barrier layer (2c) through the material of the thermoplastic plastic film,
- forming the surface layer (2a) by consolidating the reinforcing fibres with the thermoplastic plastic matrix in a layer of the cover layer (2) which is remote from the plastic film, and
- forming the intermediate layer (2b) by consolidating the reinforcing fibres of the surface layer (2a) in a layer close to the plastic film with a proportion of the thermoplastic matrix material of the surface layer (2a) and a proportion of the thermoplastic material of the barrier layer (2c).

8. Method according to claim 7,
**characterised in that**
for the surface layer
- a non-woven fabric, a hybrid fabric, a fibre braiding or a knitted fabric of reinforcing fibres and non-consolidated thermoplastic fibres
- or a pre-consolidated thermoplastic plate with embedded reinforcing fibres is provided.

9. Method according to claim 7 or 8,
comprising the steps of:
- partial melting of the thermoplastic plastic matrix and the plastic film while heating by the application of a temperature in the range of the melting temperature of the thermoplastic plastic, in particular to a temperature range extending from a glass transition temperature to the melting temperature, and in this process
- having the thermoplastic plastic of the plastic film flow around the web end edges while forming a surround of the web end edges,
- cooling the plastic materials while establishing a permanent connection between the cover layer (2) and the webs (1) of the honeycomb core and sealing of the web end edges by the thermoplastic plastic.

10. Method according to any of claims 7 to 9,
comprising the steps of:
- shaping the honeycomb core before arranging the plastic film thereon, by wetting the honeycomb core with water by spraying or vapour deposition, placing the wetted honeycomb core in a pressing tool with a male die and a female die which provide a predetermined shape of the sandwich component, and forming the wetted honeycomb core in the pressing tool by applying pressure and at a temperature in a range of 40°C to 200°C.

## Revendications

1. Composant intercalé, comprenant au moins une couche supérieure (2), qui comprend une couche de revêtement (2a) en fibres de renfort avec une matrice thermoplastique, et un coeur en nid d'abeilles composé d'un matériau à base de cellulose et présente une pluralité de nervures (1), les bords d'extrémités de nervure étant disposés dans un plan avec lequel la couche supérieure (2) vient en contact,
la couche supérieure (2) entre la couche de revêtement (2a) et les nervures (1) du coeur en nid d'abeilles comprend une couche barrière (2c), qui est constituée d'un matériau thermoplastique exempt de fibres de renfort dont les propriétés de fusion correspondent aux propriétés de fusion du matériau de matrice thermoplastique de la couche de revêtement (2a), et une couche intermédiaire (2b) étant réalisée entre la couche de revêtement (2a) et la couche barrière (2c), cette couche intermédiaire (2b) présentant des fibres de renfort de la couche de revêtement (2a) et du matériau thermoplastique de la couche barrière (2c), les fibres de renfort de la couche intermédiaire (2b) sont traversées par une proportion du matériau de matrice thermoplastique de la couche de revêtement (2a) et par une proportion du matériau thermoplastique de la couche barrière, **caractérisé en ce que** les bords d'extrémité des nervures (1) du coeur en nid d'abeilles sont bordés par la couche barrière (2c) thermoplastique et sont ainsi reliés à la couche supérieure (2).

2. Composant intercalé selon la revendication 1, **caractérisé en ce que** la longueur à laquelle les bords d'extrémité de la nervure du coeur en nid d'abeilles pénètrent dans la couche barrière ou la profondeur de la bordure se situe au-dessus de 80 % de la largeur de nervure, notamment entre 100 et 200 % de la largeur de nervure.

3. Composant intercalé selon au moins l'une quelconque des revendications précédentes, **caractérisé en ce que** le matériau thermoplastique de la couche barrière (2c) et le matériau de matrice thermoplastique de la couche de revêtement (2a) est le même matériau thermoplastique, qui notamment est un polyamide, un acrylonitrile butadiène styrène, un polypropylène et/ou un autre polyoléfine.

4. Composant intercalé selon au moins l'une quelconque des revendications précédentes, **caractérisé en ce que** la couche de revêtement (2a) présente une épaisseur se trouvant dans une plage entre 0,4 et 0,8 mm, en particulier 0,6 mm, et la somme des épaisseurs de la couche barrière (2c) et la couche intermédiaire (2b) s'élève dans une plage entre 0,2 et 0,4 mm et de préférence à 0,3 mm.

5. Composant intercalé selon au moins l'une quelconque des revendications précédentes, **caractérisé en ce que** l'épaisseur de la couche barrière se situe au dessus de 30 % et en dessous de 150 %, en particulier entre 30 et 50 % de la largeur de nervure.

6. Composant intercalé selon au moins l'une quelconque des revendications 1 à 5, **caractérisé en ce que** les fibres de renfort sont des fibres naturelles, des fibres de verres, des fibres de carbone, des fibres en polymère, notamment des fibres en aramide ou une combinaison de ces dernières.

7. Procédé de fabrication d'un composant intercalé selon au moins l'une quelconque des revendications 1 à 6, la couche supérieure (2) est formée au moins sur un des côtés inférieurs du coeur en nid d'abeilles ou supérieurs du coeur en nid d'abeilles, et les bords d'extrémité de nervure du coeur en nid d'abeilles étant disposés dans un plan sur lequel la couche supérieure (2) vient prendre appui, comprenant les étapes suivantes :
- disposer une feuille en matière plastique thermoplastique sur le coeur en nid d'abeilles,
- disposer un demi-produit sur la feuille en matière plastique, le demi-produit se composant de fibres de renfort avec une matrice en matière plastique thermoplastique,
- chauffer et comprimer l'agencement en coeur de nid d'abeilles, feuille en matière plastique et demi-produit dans un outil de pression, tout en au moins faisant fondre la matrice en plastique thermoplastique et la feuille en matière plastique qui sont fabriquées en matériaux thermoplastiques lesquels présentent des propriétés de fusion correspondantes,
- former la couche barrière (2c) au moyen du matériau de la feuille en matière plastique thermoplastique,
- former la couche de revêtement (2a) par consolidation des fibres de renfort avec la matrice en matière plastique thermoplastique dans une couche de la couche supérieure (2) se trouvant éloignée de la feuille en matière plastique (2), et
- former la couche intermédiaire (2b) par consolidation des fibres de renfort de la couche de revêtement (2a) dans une couche proche de la feuille en matière plastique avec une proportion du matériau de matrice thermoplastique de la couche de revêtement (2a) et avec une proportion du matériau thermoplastique de la couche barrière (2c).

8. Procédé selon la revendication 7, **caractérisé en ce que** pour la couche de revêtement
- un non-tissé, un tissu hybride, treillis de fibres ou tricotage en fibres de renfort et en fibres de renfort non consolidées
- ou une plastique thermoplastique préconsolidée au moyen de fibres de renfort enrobées, est préparé(e)

9. Procédé selon la revendication 7 ou la revendication 8, comprenant les étapes suivantes :
- faire fondre la matrice en matière plastique thermoplastique et la feuille en matière plastique, et sous la chaleur par application d'une température dans la plage de la température de fusion de la matière plastique thermoplastique, en particulier dans une plage de température qui s'étend entre une température de transition vitreuse et la température de fusion, et
- faire couler les bords d'extrémité de nervure dans la matière plastique thermoplastique de la feuille pour former une bordure des bords d'extrémité de nervure
- refroidir les matières plastiques pour former une liaison fixe entre la couche de revêtement (2) et les nervures (1) du coeur en nid d'abeilles et étanchéifier les bords d'extrémité de nervure au moyen de matière plastique thermoplastique.

10. Procédé selon l'une quelconque des revendications 7 à 9, comprenant l'étape suivante :
- donner une forme au coeur en nid d'abeilles avant sa disposition de la feuille en matière plastique, par humidification du coeur en nid d'abeilles avec de l'eau par pulvérisation ou vaporisation, disposer le coeur en nid d'abeilles humidifié dans un outil de pression avec un poinçon et une matrice, qui donnent une forme prédéterminée au composant en sandwich et la déformation du coeur en nid d'abeilles dans l'outil de pression par exercice de pression et à une température dans une plage allant entre 40 °C et 200 °C.
